# EUROPÄISCHE PATENTSCHRIFT

(11) **EP 0 814 571 B1**
(45) Veröffentlichungstag und Bekanntmachung des Hinweises auf die Patenterteilung: **22.09.2004**
(21) Anmeldenummer: 97108555.0
(22) Anmeldetag: 28.05.1997
(51) Int. Cl.: H04B 1/38

(54) **Rundfunkempfänger mit integrierter Fernsprecheinrichtung**
Broadcast receiver with integrated telephone device
Récepteur de radiodiffusion avec un dispositif téléphonique intégré

(30) Priorität: 21.06.1996 DE 19624761
(43) Veröffentlichungstag der Anmeldung: 29.12.1997
(73) Patentinhaber: ROBERT BOSCH GMBH, 70442 Stuttgart (DE)
(72) Erfinder: Oberländer, Ralf, 31139 Hildesheim (DE)

(56) Entgegenhaltungen:
- EP-A- 0 271 740
- EP-A- 0 338 834
- US-A- 5 101 510

## Beschreibung

### Stand der Technik

Die Erfindung geht von einem Rundfunkempfänger nach der Gattung des Hauptanspruchs aus.

Aus der Bedienungsanleitung des BOSCH Autoradios London RDM 126 ist ein Autoradio bekannt, bei dem ein Zeitverzögerungsglied vorgesehen ist. Nach Abstellen der Zündung des Kraftfahrzeugs, in dem sich das Autoradio befindet, wird das Autoradio nach Betätigung einer Taste für eine durch das Zeitverzögerungsglied vorgegebene Zeit durch die Autobatterie mit Spannung versorgt.

EP 0 271 740 offenbart einen Rundfunkempfänger bei dem ein Zeitverzögerungsglied vorgesehen ist. Nach Abstellen der Zündung des Kraftfahrzeugs, in dem sich der Rundfunkempfänger befindet, wird der Rundfunkempfänger nach Betätigung einer Taste für eine durch das Zeitverzögerungsglied vorgegebene Zeit durch die Autobatterie mit Spannung versorgt.

### Vorteile der Erfindung

Der erfindungsgemäße Rundfunkempfänger mit den Merkmalen des Hauptanspruchs hat demgegenüber den Vorteil, daß ein zweites Zeitverzögerungsglied vorgesehen ist und daß das erste und das zweite Zeitverzögerungsglied die Stromversorgung verschiedener Baugruppen des Rundfunkempfängers in unterschiedlicher Zeit nach Abschalten eines Teiles der Spannungsversorgung unterbrechen. Auf diese Weise lassen sich Baugruppen mit hohem Stromverbrauch früher abschalten als Baugruppen mit niedrigem Stromverbrauch, so daß der Benutzer nach Abschalten des Teiles der Spannungsversorgung einerseits nicht auf die Funktionalität des kompletten Gerätes verzichten muß und andererseits die noch angeschlossene Spannungsquelle geschont wird. Dieser Vorteil wirkt sich insbesondere beim Einsatz des erfindungsgemäßen Rundfunkempfängers als Autoradio mit integrierter Fernsprecheinrichtung in einem Kraftfahrzeug aus. Dabei stellt das Autoradio einen sehr starken Verbraucher dar, der zur Schonung der Batterie kurze Zeit nach Abschalten des Teiles der Spannungsversorgung über den Zündschalter für den Motor des Kraftfahrzeuges ebenfalls abgeschaltet werden kann. Die Fernsprecheinrichtung als relativ schwacher Verbraucher kann dann zu einem späteren Zeitpunkt abgeschaltet werden, ohne die Batterie übermäßig zu belasten. Somit bleibt der Benutzer bei gleichzeitiger Schonung der Batterie länger erreichbar und es entfällt der Aufwand für die Eingabe des Zugangsberechtigungscodes beim Wiedereinschalten der Fernsprecheinrichtung.

Durch die in den Unteransprüchen aufgeführten Maßnahmen sind vorteilhafte Weiterbildungen und Verbesserungen des im Hauptanspruch angegebenen Rundfunkempfängers möglich.

Besonders vorteilhaft ist dabei die Möglichkeit, die Verzögerungszeit der Zeitverzögerungsglieder über eine Bedieneinheit des Rundfunkempfängers einzustellen. Auf diese Weise kann der Benutzer die Verzögerungszeit der Zeitverzögerungsglieder nach seinen Wünschen selbst wählen.

### Zeichnung

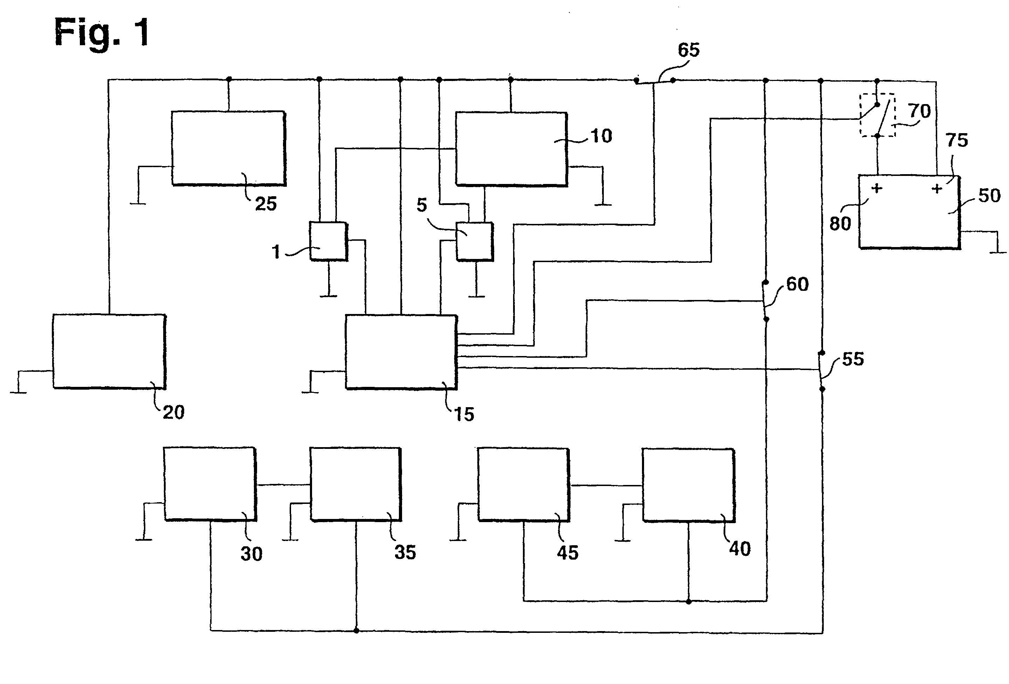

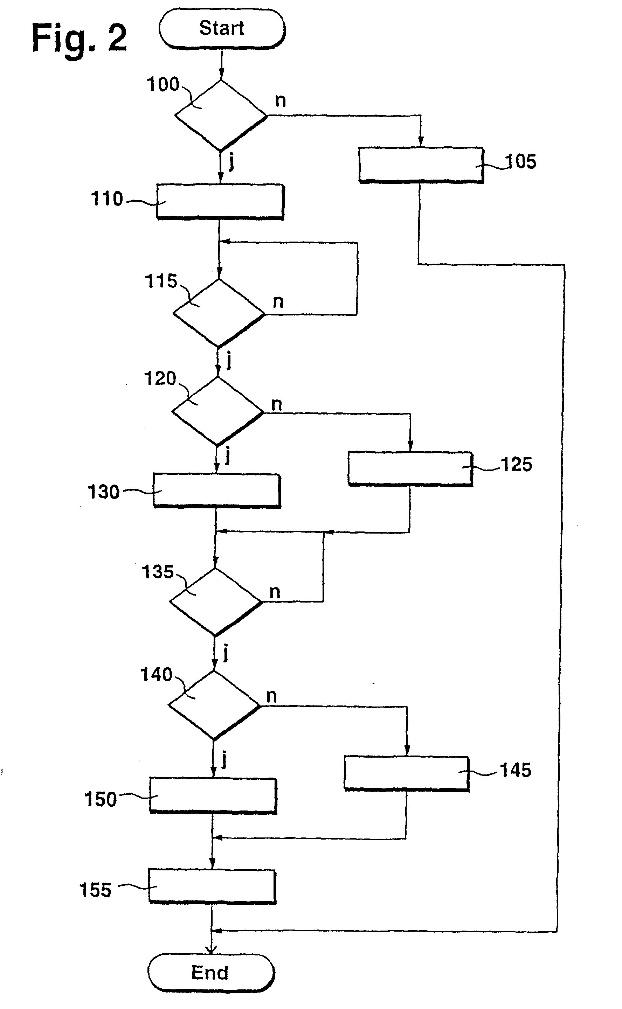

Ein Ausführungsbeispiel der Erfindung ist in der Zeichnung dargestellt und in der nachfolgenden Beschreibung näher erläutert. Es zeigen Figur 1 als Blockschaltbild einen Rundfunkempfänger mit integrierter Fernsprecheinrichtung und Figur 2 einen Ablaufplan für die Gerätesteuerung.

### Beschreibung des Ausführungsbeispiels

In Figur 1 kennzeichnet 15 die Gerätesteuerung eines als Autoradio ausgebildeten Rundfunkempfängers mit integrierter Fernsprecheinrichtung 40, 45. An die Gerätesteuerung 15 sind ein erstes Zeitverzögerungsglied 1 und ein zweites Zeitverzögerungsglied 5 angeschlossen. Der Rundfunkempfänger umfaßt außerdem eine Anzeigevorrichtung 25, eine Bedieneinheit 10, einen Speicher 20, ein Rundfunkempfangsteil 30, ein mit dem Rundfunkempfangsteil 30 verbundenes Kassettenlaufwerk 35, eine Mobilfunk-Sende- und Empfangseinheit 40 und einen mit der Mobilfunk-Sende- und Empfangseinheit 40 verbundenen Mobilfunk-Basisband-Frequenzumsetzer 45. Über einen ersten Schalter 55 sind der Rundfunkempfangsteil 30 und das Kassettenlaufwerk 35 als Audiobaugruppen mit einem ersten Pluspol 75 einer Spannungsversorgung 50 verbindbar. Alle genannten Baugruppen und die Spannungsversorgung 50 sind mit einem Bezugspotential verbunden. Die Mobilfunk-Sende- und Empfangseinheit 40 und der Mobilfunk-Basisband-Frequenzumsetzer 45 sind über einen zweiten Schalter 60 ebenfalls mit dem ersten Pluspol 75 verbindbar. Das erste und das zweite Zeitverzögerungsglied 1 und 5, die Bedieneinheit 10, die Gerätesteuerung 15, der Speicher 20 und die Anzeigevorrichtung 25 sind über einen dritten Schalter 65 mit dem ersten Pluspol 75 verbindbar. Ein zweiter Pluspol 80 der Spannungsversorgung 50 ist über einen Zündschalter 70 mit dem ersten Pluspol 75 verbindbar. Der erste, der zweite und der dritte Schalter 55, 60 und 65 sind jeweils mit der Gerätesteuerung 15 verbunden. Die Gerätesteuerung 15 ist außerdem über den Zündschalter 70 direkt mit dem zweiten Pluspol 80 verbindbar. Die Bedieneinheit 10 ist mit den beiden Zeitverzögerungsgliedern 1 und 5 verbunden.

In dem beschriebenen Ausführungsbeispiel weist der Rundfunkempfänger eine Fernsprecheinrichtung, bestehend aus der Mobilfunk-Sende- und Empfangseinheit 40 und dem Mobilfunk-Basisband-Frequenzumsetzer 45, auf. Dabei dient der Mobilfunk-Basisband-Frequenzumsetzer 45 der Umsetzung von Fernsprechsignalen aus dem Basisband in den Frequenzbereich für die Mobilfunkübertragung im Sendebetrieb und der Umsetzung von im Frequenzbereich der Mobilfunkübertragung empfangenen Fernsprechsignalen in das Basisband bei Empfangsbetrieb. Weitere für den Fernsprechbetrieb benötigte Baugruppen, die der weiteren Verarbeitung der Fernsprechsignale und der elektroakustischen bzw. akustisch-elektrischen Wandlung dienen, sind in der Figur nicht explizit dargestellt und der Übersichtlichkeit wegen im Mobilfunk-Basisband-Frequenzumsetzer 45 integriert zu verstehen. Weiterhin kann der Rundfunkempfänger anstelle des Kassettenlaufwerks 35 oder zusätzlich zum Kassettenlaufwerk 35 einen beispielsweise als Compact-Disc-Wechsler ausgebildeten Compact-Disc-Spieler aufweisen, dessen Stromversorgung über den ersten Schalter 55 erfolgt. Über den ersten Schalter 55 erfolgt also die Stromzuführung für die Audiobaugruppen 30, 35, über den zweiten Schalter 60 erfolgt die Stromzuführung für die Fernsprechbaugruppen 40, 45 und über den dritten Schalter 65 erfolgt die Stromzuführung für die Baugruppen, die sowohl von den Audiobaugruppen 30, 35 als auch von den Fernsprechbaugruppen 40, 45 benötigt werden. Dies ist zum einen die Gerätesteuerung 15 des Rundfunkempfängers. Dies ist weiterhin der Speicher 20, der sowohl zur Speicherung von Kurzwahlzielen für die Fernsprecheinrichtung 40, 45, als auch zur Speicherung von Stationstasten und Sendernamen für den Rundfunkempfangsteil 30 verwendet werden kann. Die Bedieneinheit 10 läßt sich ebenfalls sowohl für die Fernsprecheinrichtung 40, 45 beispielsweise zur Auswahl von Kurzwahlzielen, als auch für die Audiobaugruppen 30, 35, beispielsweise zur Eingabe von Rundfunkfrequenzen, verwenden. Dasselbe gilt für die Anzeigevorrichtung 25, auf der sowohl ein Kurzwahlverzeichnis der Fernsprecheinrichtung 40, 45 als auch der aktuell eingestellte Sender des Rundfunkempfangsteils 30 dargestellt werden können. Über die Bedieneinheit 10 lassen sich außerdem die Verzögerungszeiten der beiden Zeitverzögerungsglieder 1 und 5 einstellen.

Bei eingeschalteter Zündung, d. h. bei geschlossenem Zündschalter 70 sind auch der erste, der zweite und der dritte Schalter 55, 60 und 65 geschlossen. Alle Baugruppen des Rundfunkempfängers sind somit ausreichend mit Strom versorgt. Wird nun der über den Zündschalter 70 für den Motor eines Kraftfahrzeugs zugeleitete Spannungsteil vom zweiten Pluspol 80 durch Öffnen des Zündschalters 70 abgeschaltet, so erfolgt die Spannungsversorgung der Baugruppen des Rundfunkempfängers über den ersten Pluspol 75 der Spannungsversorgung 50. Die Gerätesteuerung 15 ist mit dem Zündschalter 70 verbunden und detektiert daher das Abschalten des Spannungsteils vom zweiten Pluspol 80 durch das Öffnen des Zündschalters 70. Daraufhin veranlaßt die Gerätesteuerung 15 die Aktivierung der beiden Zeitverzögerungsglieder 1 und 5. Bei Ablauf der für das erste Zeitverzögerungsglied 1 vorgegebenen Zeit sendet das erste Zeitverzögerungsglied 1 ein entsprechendes Signal an die Gerätesteuerung 15, durch das die Gerätesteuerung 15 veranlaßt wird, den ersten Schalter 55 zu öffnen. Dadurch werden die Audiobaugruppen 30, 35 von der Spannungsversorgung 50 getrennt und damit abgeschaltet. Nach Ablauf der für das zweite Zeitverzögerungsglied 5 vorgegebenen Zeit sendet das zweite Zeitverzögerungsglied 5 ein entsprechendes Signal an die Gerätesteuerung 15, das die Gerätesteuerung 15 veranlaßt, den zweiten Schalter 60 zu öffnen. Dadurch wird die Fernsprecheinrichtung 40, 45 von der Spannungsversorgung 50 getrennt und damit abgeschaltet. Erst mit Empfang des zeitlich späteren Signals von dem Zeitverzögerungsglied 1, 5 mit der längeren Verzögerungszeit öffnet die Gerätesteuerung 15 auch den dritten Schalter 65 und trennt damit die von den Audiobaugruppen 30, 35 und von der Fernsprecheinrichtung 40, 45 gemeinsam genutzten Baugruppen von der Spannungsversorgung 50. Damit sichergestellt ist, daß der erste und der zweite Schalter 55 und 60 auch wirklich geöffnet wurden, erfolgt die Öffnung des dritten Schalters 65 mit einer gewissen Verzögerung nach Öffnen des ersten und des zweiten Schalters 55 und 60. Mit dem Öffnen des dritten Schalters 65 wird auch die Stromversorgung der beiden Zeitverzögerungsglieder 1 und 5 unterbrochen. Auf diese Weise spielt es keine Rolle, bei welchem der beiden Zeitverzögerungsglieder 1, 5 eine längere Verzögerungszeit eingestellt wurde, da beide Zeitverzögerungsglieder 1, 5 erst nach Öffnen des ersten und des zweiten Schalters 55 und 60 abgeschaltet werden. Die beiden Zeitverzögerungsglieder 1 und 5 sind in ihrer maximal einstellbaren Verzögerungszeit begrenzt, so daß nach Abschalten der Zündung kein Endlosbetrieb bei gleichzeitiger Erschöpfung der Batterie stattfindet.

Für die Einstellung der Verzögerungszeiten der Zeitverzögerungsglieder 1 und 5 sind die im folgenden beschriebenen Varianten denkbar. Wird für beide Verzögerungszeiten an der Bedieneinheit 10 der Wert Null eingestellt, so werden sämtliche Baugruppen mit Abschalten der Zündung durch den Zündschalter 70 ebenfalls abgeschaltet. Auf diese Weise wird die nach Abschalten der Zündung mit der Spannungsversorgung 50 identische Autobatterie nach Abschalten der Zündung nicht beansprucht.

Wird die Verzögerungszeit des ersten Zeitverzögerungsgliedes 1 auf Null gesetzt und die Verzögerungszeit des zweiten Zeitverzögerungsgliedes 5 auf einen Wert größer Null, so werden die Audiobaugruppen 30, 35 mit Abschalten der Zündung ebenfalls abgeschaltet und die Fernsprecheinrichtung 40, 45 bleibt für die für das zweite Zeitverzögerungsglied 5 eingestellte Verzögerungszeit weiterhin betriebsbereit. Auf diese Weise wird die Autobatterie nach Abschalten der Zündung geschont, da die Audiobaugruppen 30, 35, die einen relativ hohen Stromverbrauch haben, mit der Zündung abgeschaltet wurden und die Fernsprecheinrichtung 40, 45 einen relativ niedrigen Stromverbrauch aufweist.

Wird die Verzögerungszeit des zweiten Zeitverzögerungsgliedes 5 auf Null gesetzt und die Verzögerungszeit des ersten Zeitverzögerungsgliedes 1 auf einen Wert größer Null, so wird mit Abschalten der Zündung die Fernsprecheinrichtung 40, 45 abgeschaltet und die Audiobaugruppen 30, 35 bleiben für die für das erste Zeitverzögerungsglied 1 eingestellte Verzögerungszeit weiterhin betriebsbereit. Dies führt dann entsprechend zu einer relativ starken Beanspruchung der Autobatterie.

Ein Kompromiß zwischen geringer Beanspruchung der Autobatterie nach Abschalten der Zündung einerseits und optimaler Nutzung des Rundfunkempfängers nach Abschalten der Zündung andererseits wird dadurch erreicht, daß für die Verzögerungszeit des ersten Zeitverzögerungsgliedes 1 ein kleinerer Wert eingestellt wird als für die Verzögerungszeit des zweiten Zeitverzögerungsgliedes 5. Auf diese Weise bleibt der Rundfunkempfänger nach Abschalten der Zündung voll betriebsbereit, das Autoradio läuft weiter und der Fahrer ist weiterhin telefonisch erreichbar. Nach Ablauf der kleineren Verzögerungszeit wird dann das Autoradio bzw. die Audiobaugruppen 30, 35 abgeschaltet, um die Batterie zu schonen. Der Fahrer bleibt jedoch weiterhin telefonisch erreichbar und wenn er die Zündung zum Zweck der Weiterfahrt vor Ablauf der größeren Verzögerungszeit wieder einschaltet, ist auch keine erneute Eingabe eines Zugangsberechtigungscodes für die Fernsprecheinrichtung 40, 45 erforderlich. Andernfalls wird nach Ablauf der größeren Verzögerungszeit auch die Fernsprecheinrichtung 40, 45 abgeschaltet.

Wird die Zündung durch Schließen des Zündschalters 70 wieder eingeschaltet, so wird dies ebenfalls durch die Gerätesteuerung 15 detektiert, indem sie über den Zündschalter 70 direkt mit Spannung versorgt wird und der erste, der zweite und der dritte Schalter 55, 60 und 65 werden geschlossen, sofern sie vor Schließen des Zündschalters 70 geöffnet waren.

Figur 2 zeigt den Ablauf der Steuerung der drei Schalter 55, 60 und 65 durch die Gerätesteuerung 15 in Abhängigkeit der Stellung des Zündschalters 70. Bei Betätigung des Zündschalters 70 wird der in Figur 2 dargestellte Ablauf gestartet. Bei Programmpunkt 100 wird geprüft, ob der Zündschalter 70 geöffnet wurde. Ist dies der Fall, so wird zu Programmpunkt 110 verzweigt, andernfalls wurde der Zündschalter 70 geschlossen und es wird zu Programmpunkt 105 verzweigt. Bei Programmpunkt 105 werden der erste, der zweite und der dritte Schalter 55, 60 und 65 durch die Gerätesteuerung 15 geschlossen, sofern sie vor Schließen des Zündschalters 70 geöffnet waren. Anschließend wird der Programmteil verlassen. Bei Programmpunkt 110 werden die beiden Zeitverzögerungsglieder 1 und 5 aktiviert. Bei Programmpunkt 115 wird geprüft, ob von einem Zeitverzögerungsglied 1, 5 ein Signal an die Gerätesteuerung 15 abgegeben wurde. Ist dies der Fall, so wird zu Programmpunkt 120 verzweigt, andernfalls wird diese Prüfung wiederholt. Bei Programmpunkt 120 wird geprüft, ob das empfangene Signal vom ersten Zeitverzögerungsglied 1 stammt.

Ist dies der Fall, so wird zu Programmpunkt 130 verzweigt, andernfalls wird zu Programmpunkt 125 verzweigt. Bei Programmpunkt 130 veranlaßt die Gerätesteuerung 15 die Öffnung des ersten Schalters 55. Bei Programmpunkt 125 veranlaßt die Gerätesteuerung 15 die Öffnung des zweiten Schalters 60. Nach Programmpunkt 125 bzw. Programmpunkt 130 wird jeweils mit Programmpunkt 135 fortgefahren. Bei Programmpunkt 135 wird geprüft, ob ein weiteres Signal von einem der beiden Zeitverzögerungsglieder 1, 5 von der Gerätesteuerung 15 empfangen wurde. Ist dies der Fall, so wird zu Programmpunkt 140 verzweigt, andernfalls wird die Prüfung wiederholt. Bei Programmpunkt 140 wird geprüft, ob das weitere Signal vom ersten Zeitverzögerungsglied 1 stammt. Ist dies der Fall, so wird zu Programmpunkt 150 verzweigt, andernfalls wird zu Programmpunkt 145 verzweigt. Bei Programmpunkt 150 veranlaßt die Gerätesteuerung 15 die Öffnung des ersten Schalters 55. Bei Programmpuunkt 145 veranlaßt die Gerätesteuerung 15 die Öffnung des zweiten Schalters 60. Nach Programmpunkt 150 bzw. 145 wird jeweils mit Programmpunkt 155 fortgefahren. Bei Programmpunkt 155 öffnet die Gerätesteuerung 15 nach einer kurzen Verzögerung auch den dritten Schalter 65. Anschließend wird der Programmteil verlassen.

In einem weiteren Ausführungsbeispiel ist auch die Verwendung von mehr als zwei Zeitverzögerungsgliedern denkbar. Auf diese Weise ist eine differenziertere Abschaltung von Baugruppen möglich, so daß eine weitere Optimierung der Funktionalität des Rundfunkempfängers nach Abschalten der Zündung bei gleichzeitiger Minimierung der Belastung der Autobatterie ermöglicht wird. Dabei muß jedoch beachtet werden, daß nicht Baugruppen frühzeitig abgeschaltet werden, die für den Betrieb anderer noch betriebsbereiter Baugruppen notwendig sind.

## Patentansprüche

1. Rundfunkempfänger, insbesondere Autoradio, mit einem ersten Zeitverzögerungsglied (1) zur verzögerten Abschaltung des Rundfunkempfängers nach Abschalten eines Teiles der Spannungsversorgung des Rundfunkempfängers, insbesondere des über den Zündschalter (70) für den Motor eines Kraftfahrzeugs zugeleiteten Spannungsteils, durch einen Schaltvorgang, **dadurch gekennzeichnet, daß** mindestens ein zweites Zeitverzögerungsglied (5) vorgesehen ist, und daß das erste und das zweite Zeitverzögerungsglied (1, 5) eingerichtet sind die Stromversorgung verschiedener Baugruppen (10, 15, 20, 25, 30, 35, 40, 45) des Rundfunkempfängers in unterschiedlicher Zeit nach Abschalten des Teiles der Spannungsversorgung zu unterbrechen.

2. Rundfunkempfänger nach Anspruch 1, **dadurch gekennzeichnet, daß** der Rundfunkempfänger eine Fernsprecheinrichtung (40, 45) umfaßt.

3. Rundfunkempfänger nach Anspruch 1 oder 2, **dadurch gekennzeichnet, daß** die begrenzte Verzögerungszeit der Zeitverzögerungsglieder (1, 5) über eine Bedieneinheit (10) des Rundfunkempfängers einstellbar ist.

4. Rundfunkempfänger nach Anspruch 2 oder 3, **dadurch gekennzeichnet, daß** das zweite Zeitverzögerungsglied (5) Baugruppen (40, 45) für den Fernsprechbetrieb abschaltet, wobei Baugruppen (10, 15, 20, 25), die sowohl für den Rundfunkempfangsbetrieb als auch für den Fernsprechbetrieb notwendig sind, mit dem Zeitverzögerungsglied (1, 5) abgeschaltet werden, dem die längste Verzögerungszeit vorgegeben ist.

5. Rundfunkempfänger nach einem der Ansprüche 1 bis 4, **dadurch gekennzeichnet, daß** der Rundfunkempfänger neben einem Tuner (30) ein Kassettenlaufwerk (35) und/oder einen Compact-Disc-Spieler aufweist, und daß das erste Zeitverzögerungsglied (1) neben dem Tuner (30) das Kassettenlaufwerk (35) und/oder den Compact-Disc-Spieler abschaltet.

6. Rundfunkempfänger einem der Ansprüche 2 bis 5, **dadurch gekennzeichnet, daß** die Fernsprecheinrichtung (40, 45) eine Mobilfunk-Sende- und Empfangseinheit (40) und einen Mobilfunk-Basisband-Frequenzumsetzer (45) aufweist, und daß das zweite Zeitverzögerungsglied (5) die Mobilfunk-Sende- und Empfangseinheit (40) und den Mobilfunk-Basisband-Frequenzumsetzer (45) abschaltet.

7. Rundfunkempfänger nach einem der vorherigen Ansprüche, **dadurch gekennzeichnet, daß** der Rundfunkempfänger eine Gerätesteuerung (15), einen Speicher (20), eine Bedieneinheit (10) und eine Anzeigevorrichtung (25) aufweist, und daß durch das Zeitverzögerungsglied (1, 5), dem die längste Verzögerungszeit vorgegeben ist, über die Gerätesteuerung (15) die Abschaltung des Speichers (20), der Anzeigevorrichtung (25), der Bedieneinheit (10) und der Gerätesteuerung (15) erfolgt.

## Claims

1. Broadcast radio receiver, in particular a car radio, having a first time delay element (1) for switching off the broadcast radio receiver with a delay after switching off a part of the voltage supply for the broadcast radio receiver, in particular the voltage part which is supplied via the ignition switch (70) for the engine of a motor vehicle, by means of a switching process, **characterized in that** at least one second time delay element (5) is provided, and **in that** the first and the second time delay elements (1, 5) are designed to interrupt the power supply to various assemblies (10, 15, 20, 25, 30, 35, 40, 45) of the broadcast radio receiver at a different time after the part of the voltage supply has been switched off.

2. Broadcast radio receiver according to Claim 1, **characterized in that** the broadcast radio receiver has a hands-free device (40, 45).

3. Broadcast radio receiver according to Claim 1 or 2, **characterized in that** the limited delay time of the time delay elements (1, 5) can be adjusted via a control unit (10) for the broadcast radio receiver.

4. Broadcast radio receiver according to Claim 2 or 3, **characterized in that** the second time delay element (5) switches off assemblies (40, 45) for the hands-free mode, with assemblies (10, 15, 20, 25) which are required both for the broadcast radio reception mode and for the hands-free mode being switched off by means of the time delay element (1, 5), for which the longest delay time is specified.

5. Broadcast radio receiver according to one of Claims 1 to 4, **characterized in that** the broadcast radio receiver has a cassette drive (35) and/or a compact disk player in addition to a tuner (30), and **in that** the first time delay element (1) switches off the cassette drive (35) and/or the compact disk player in addition to the tuner (30).

6. Broadcast radio receiver according to one of Claims 2 to 5, **characterized in that** the hands-free device (40, 45) has a mobile radio transmitting and receiving unit (40) and a mobile radio baseband frequency converter (45), and **in that** the second time delay element (5) switches off the mobile radio transmitting and receiving unit (40) and the mobile radio baseband frequency converter (45).

7. Broadcast radio receiver according to one of the preceding claims, **characterized in that** the broadcast radio receiver has an appliance controller (15), a memory (20), a control. unit (10) and a display apparatus (25), and **in that** the time delay element (1, 5) which has the longest specified delay time is used to switch off, via the appliance controller (15), the memory (20), the display apparatus (25), the control unit (10) and the appliance controller (15).

## Revendications

1. Récepteur radio, notamment un autoradio, doté d'un temporisateur (1) pour couper le récepteur radio avec un effet différé après avoir coupé une partie de l'alimentation en courant du récepteur radio, notamment la partie de tension amenée par le contacteur d'allumage (70) du moteur d'un véhicule, par une opération de coupure,
**caractérisé en ce qu'**
au moins un deuxième temporisateur (5) est prévu, et les premier et deuxième temporisateurs (1, 5) sont disposés pour interrompre l'alimentation en courant de différents modules (10, 15, 20, 25, 30, 35, 40, 45) du récepteur radio à des temps différents, après avoir coupé la partie d'alimentation en courant.

2. Récepteur radio selon la revendication 1,
**caractérisé en ce que**
le récepteur radio comprend un dispositif téléphonique (40, 45).

3. Récepteur radio selon la revendication 1 ou 2,
**caractérisé en ce que**
le temps de délai limité des temporisateurs (1, 5) est réglable à l'aide d'une unité de service (10) du récepteur radio.

4. Récepteur radio selon la revendication 2 ou 3,
**caractérisé en ce que**
le deuxième temporisateur (5) coupe les modules (40, 45) de l'exploitation téléphonique, les modules (10, 15, 20, 25) nécessaires aussi bien au fonctionnement en réception radio qu'à l'exploitation téléphonique étant coupés avec le temporisateur (1, 5) auquel le temps de délai le plus long est préattribué.

5. Récepteur radio selon l'une quelconque des revendications 1 à 4,
**caractérisé en ce que**
le récepteur radio présente, outre un tuner (30), un lecteur de cassettes (35) et/ou un lecteur de disques compacts (CD), et le premier temporisateur délai (1) coupe, outre le tuner (30), le lecteur de cassettes (35) et/ou le lecteur de disques compacts (CD).

6. Récepteur radio selon l'une quelconque des revendications 2 à 5,
**caractérisé en ce que**
le dispositif téléphonique (40, 45) présente une unité d'émission et de réception de téléphonie mobile (40) et un changeur de fréquence à bande de base de téléphonie mobile (45), et le deuxième temporisateur (5) coupe l'unité d'émission et de réception de téléphonie mobile (40) et le changeur de fréquence à bande de base de téléphonie mobile (45).

7. Récepteur radio selon l'une quelconque des revendications précédentes,
**caractérisé en ce que**
le récepteur radio présente une commande d'appareils (15), une mémoire (20), une unité de service (10) et un dispositif d'affichage (25), et grâce au temporisateur (1, 5) auquel est attribué le temps de temporisateur le plus long, la mémoire (20), le dispositif d'affichage (25), l'unité de service (10) et la commande d'appareils (15) sont coupés à l'aide de la commande d'appareils (15).
